Europäisches Patentamt

European Patent Office

Office européen des brevets

(19)

(11) Publication number: **0 216 630**
A2

(12) **EUROPEAN PATENT APPLICATION**

(21) Application number: **86307288.0**

(22) Date of filing: **23.09.86**

(51) Int. Cl.⁴: **A 01 K 11/00**

(30) Priority: **24.09.85 NZ 213593**

(43) Date of publication of application:
**01.04.87 Bulletin 87/14**

(84) Designated Contracting States:
**AT BE DE FR GB**

(71) Applicant: **Whangapirita, Ben**
**16 Cambridge Terrace**
**Gore(NZ)**

(72) Inventor: **Dumbrell, John Alan**
**22 Gisborne Street Bulleen**
**Melbourne Victoria(AU)**

(74) Representative: **Ayers, Martyn Lewis Stanley**
**J.A. KEMP & CO. 14 South Square Gray's Inn**
**London, WC1R 5EU(GB)**

(54) Ear tag applicator tool.

(57) An ear tag applicator comprising a scissor-action ear punching tool having provision for the fitment of an ear tag to the distal end of one of the jaws of the apparatus. The ear tag is caused to pass through the hole punched in an animal's ear under at least the guiding influence of the ear punching element which is pivoted from the other jaw (albeit a floating pivot) upon withdrawal of the punching element back through the ear. The ear tag with which the device can be used is of a unitary kind having first and second portions held together at or adjacent an extremity of each portion by a spanning region in such a way that a distal extremity of said first portion can be passed through an animal's ear and the tag can then be arranged so that the said spanning portion rests positioned through the ear and said first and second portions together sandwich (over at least some extent) the animal's ear. The applicator leaves the tag in such a condition on an animal's ear.

FIG 1

## "EAR TAG APPLICATOR TOOL"

**0216630**

The present invention relates to improvements in and/or relating to ear tagging and in particular although not solely to ear tag applicators.

In my New Zealand patent application number 198788 (and Australian application 89795/82) there is disclosed an ear tag applicator for tags of a unitary kind having first and second portions held together at or adjacent an extremity of each portion by a spanning region in such a way that a distal extremity of said first portion can be passed through an animal's ear and the tag can then be arranged so that the said spanning portion rests positioned through the ear and said first and second portions together sandwich (over at least some extent) the animal's ear. The most famous tag of the type is that manufactured by Leader Products Pty. Limited and as disclosed in New Zealand patent specification number 136494.

Such a form of ear tag ordinarily is applied by taking an ear punching tool and making a hole in a sheeps ear (it is usually used for sheep but could be used for other animals) just in from an edge thereof, manually prizing the first and second portions apart so as to enable one of the two portions to be inserted through the hole and then manipulating the two portions to such condition where the spanning portion rests through the hole in the animals ear whereupon it is possible to allow the first and second portions to resume the substantial parallel configuration with a constriction at their distal ends (clear of the ear) being recreated to ensure that the tag is firmly located. Such a form of application of such a tag does detract from its marketability and it was for that reason the applicator of the said New Zealand patent specification was devised. That applicator when used, enabled a tag to be applied by simply passing a member through the animal's ear, engaging the distal end region of the first of second portion of the tag with that member and thereafter moving said portion through the hole or tear in the ear through which said member has been passed as said member is withdrawn therefrom to leave the tag with said first and second portions sandwiching over, at least to some extent, the ear.

The present invention relates to an improved ear applicator of a kind capable of performing such a method.

In one aspect the present invention consists in an ear tag applicator for tags of a unitary kind having first and second portions held together at or adjacent an extremity of each portion by a spanning region in such a way that a distal extremity of said first portion can be passed through an appropriate hole in an animal's ear and the tag can then be arranged so that the said spanning portion rests positioned through the ear and said first and second portions together sandwich over at least some of their extent the animals ear, said applicator comprising

means providing first and second jaw means as hereinbefore defined in a pivoted inter-relationship, said first jaw means having holding means to hold a said tag with its spanning region disposed more remotely than said distal extremity of said first portion from the pivot of said applicator, said first portion being closer to said second jaw means than said first portion, means defining an anvil region against which an ear to be tagged can be positioned and ear penetrating member co-acting means spaced from said anvil region but interposed between said anvil region and said second jaw means,

an ear penetrating member held captive by said second jaw means and passing through said co-acting means, and means whereby said jaw means can be caused to move towards each other, the construction and arrangement being such that upon movement of said first and second jaw means towards each other about the pivot thereof said ear penetrating member will be guidably urged by said second jaw means towards and preferably through said anvil region of said first jaw means, said ear penetrating member being movable in the opposite direction upon the moving apart of said first and second jaw means about the pivot thereof, said ear penetrating member having engagement means at or towards its ear penetrating end to engage the distal extremity of said first portion of a tag held on said holding means, the penetrating member having the degree of freedom relative to said first jaw means and said second jaw means whereby the penetrating member in use after passing through an animals ear interposed between the anvil region and the co-acting means of said first jaw can move to first engage said distal extremity of said first portion and thereafter pull said first portion or allow the first portion to pass through the hole that has been punched in the animals ear as said applicator and animal's ear more relatively apart and upon more relative movement leave the tag on the ear clear of said holding means and said engagement means of said ear penetrating member, the ear penetrating member (thus clear of the ear and the ear tag that has been applied to the animals ear) being able to return to a condition for a fresh punching and ear tagging cycle.

Preferably the ear penetrating member is arranged relative to said second jaw means and said co-acting means such that the same can pivot about a momentarily defined pivot (arising from an abutment therebetween whether sliding or stationary) from its disposition when disposed for punching through an animals ear (or being retracted for subsequent use) to its condition which allows the clearing of the ear from the ear penetrating member after punching and pulling of the ear tag therethrough without the need to retract the ear penetrating member.

Preferably said means whereby said jaw means can be caused to move towards each other comprises handles extending from each jaw means so that each jaw means and its handle is part of scissor action.

Preferably means is provided to bias the handles and thus the jaw means apart.

Preferably said holding means is arranged to receive an ear tag with its first and second portions splayed to some extent from their natural position relative to each other.

Preferably the distal end of said first portion when held by said holding means is engaged in a recess to which said penetrating member can move for the purpose of engaging said distal end with its engagement means.

Preferably said ear penetrating member is held captive by said second jaw means in a manner substantially as hereinafter described.

Preferably the holding means engages said second portion in such a way that when said ear penetrating means engages the distal end of said first portion and upon movement of an animal whose ear is being tagged relative to the applicator the animal tends (with the guidance of the ear penetrating member as it moves back through the hole it has punched) the animal tends to pull is own ear onto the first portion to or substantially to the spanning region thereof just before and/or as it pulls said second portion from said holding means.

Preferably said anvil region does not surround that side of the ear penetrating member having said engagement means.

In a further aspect the present invention may be said to consist in a method of tagging which involves the operative use of an applicator in accordance with the present invention and an ear tag of the kind defined.

In combination an ear tag applicator, in accordance with the present invention and an ear tag of the kind previously defined. Preferably said tag is held by said holding means in a manner ready for ear tagging by a method in accordance with the present invention.

On preferred form of the present invention will now be described with reference to the accompanying drawings in which

Figure 1 is a perspective view of an applicator in accordance with the present invention when not loaded with an ear tag and when the jaw means are at their furtherest apart condition.

Figure 2 is a side elevation view of an applicator as in Figure 1 but with the jaw means at their closes together condition, the ear penetrating tool having passed through the anvil region and with the broken line denoting the position the ear penetrating member can assume when guiding or pulling an ear tag through a just punched hole in an animals ear,

Figure 3 is a similar view to that of Figure 2 but showing the ear tag member partly retracted from the anvil region,

Figures 4a to 4d show an applicator in accordance with the present invention going through its normal range of movements that would occur when applying an ear tag, it being realised that under the action of the preferred spring biasing means the reverse movements can occur in order to ready the tool for a subsequent tagging cycle,

Figures 5a to 5e shows the applicator in accordance with the present invention when being used with an ear tag, there being shown the animals ear with which the ear tag is being engaged,

Figure 6 is a view AA with regard to Figure 5a,

Figure 7 is a similar view to that of Figure 6, but with no ear tag being held by the holding means,

Figure 8 is a view BB with respect to the applicator of figure 4a,

Figure 9 is another frontal view of the applicator but showing the same from a slightly different direction to that of figure 7,

Figure 10 is a similar view to figure 9 but with an ear tag held by the holding means,

Figure 11 is a view CC with respect to figure 5a,

Figure 12 is a similar view to figure 11 but with the handles of the scissor action in their most widely apart condition,

Figure 13 is a view of an ear tag, looking down at the first portion thereof (in the preferred form of the present invention the first portion is the longer of the two portions),

Figure 14 is a side elevation view of the tag of figure 13,

Figure 15 is a similar view to that of figure 13 of the ear tag but showing the second portion uppermost,

Figure 16 is a side elevation view of the preferred ear penetrating member,

Figure 17 is the opposite side elevation to that of figure 16,

Figure 18 is a side elevation view of the ear penetrating member of figures 16 and 17 but looking down at the engagement means thereof,

Figure 19 is the opposite side elevation view of the ear penetrating member of figure 18,

Figure 20 is an end view of the ear penetrating member of figures 16 to 19 but looking onto the end portion to be held captive by said second jaw means and

Figure 21 is the other end view of the ear penetrating member, and

Figure 22 is a view of the underside of the co-acting means.

The term "jaw means" as used herein, does not refer to members which necessarily must meet or be able to meet.

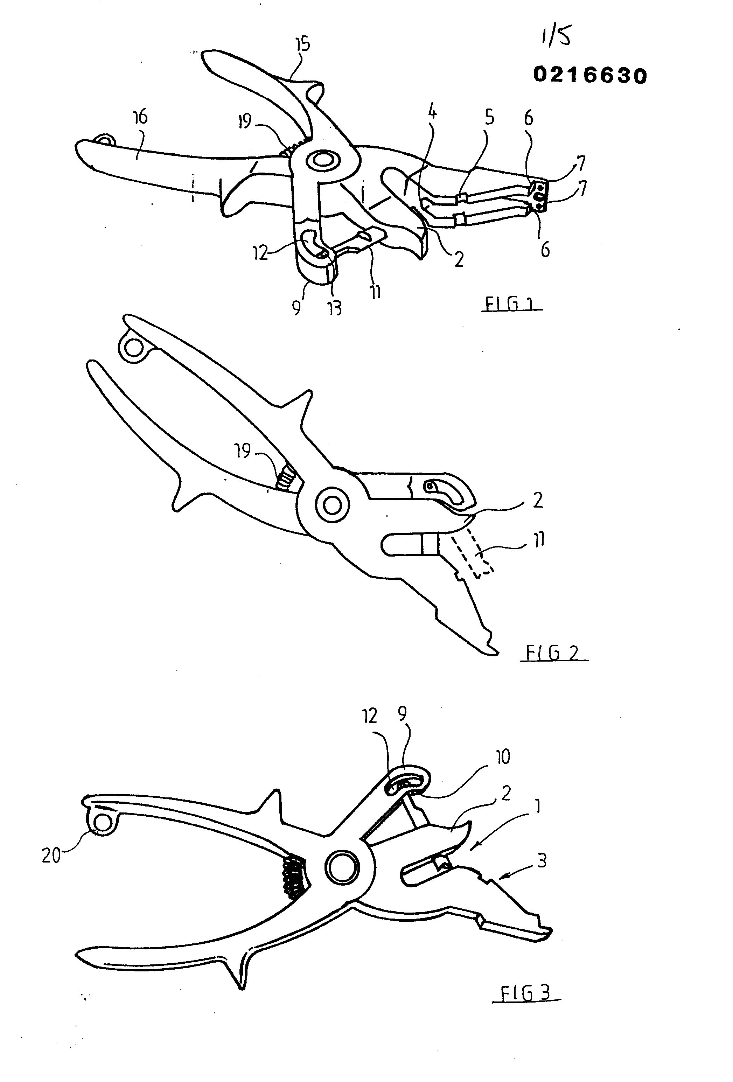

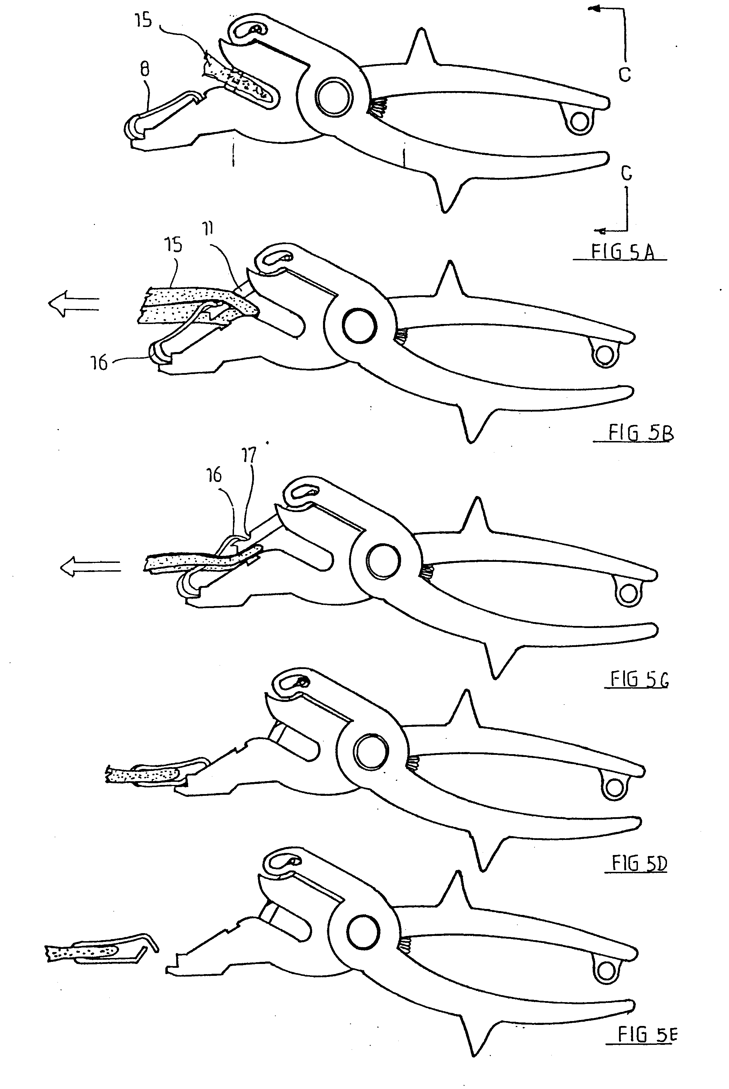

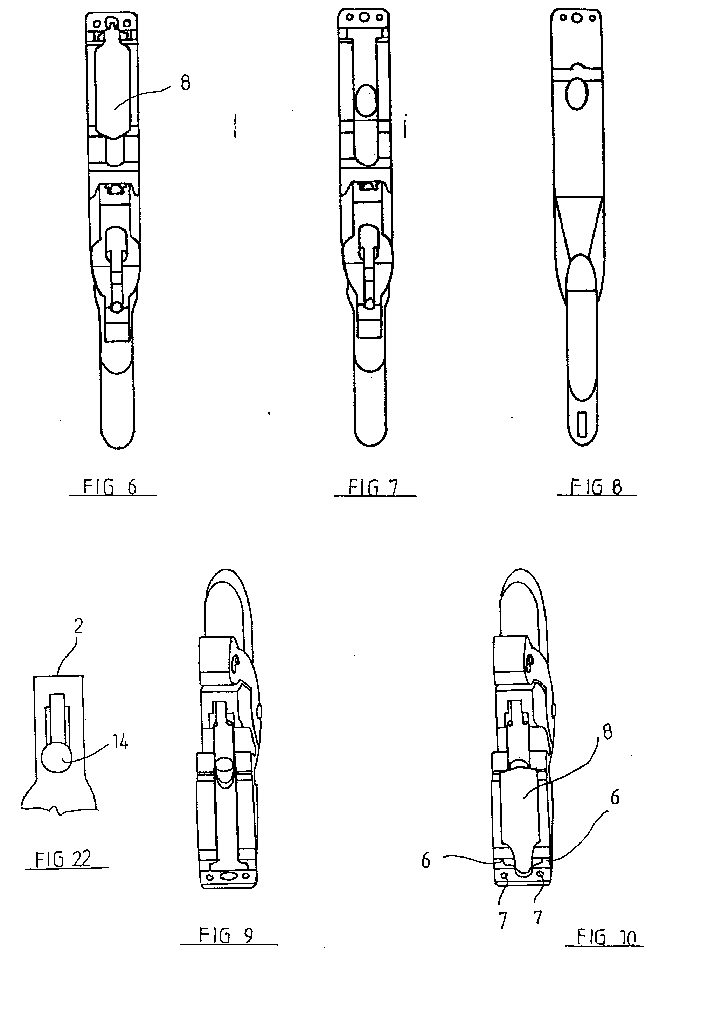

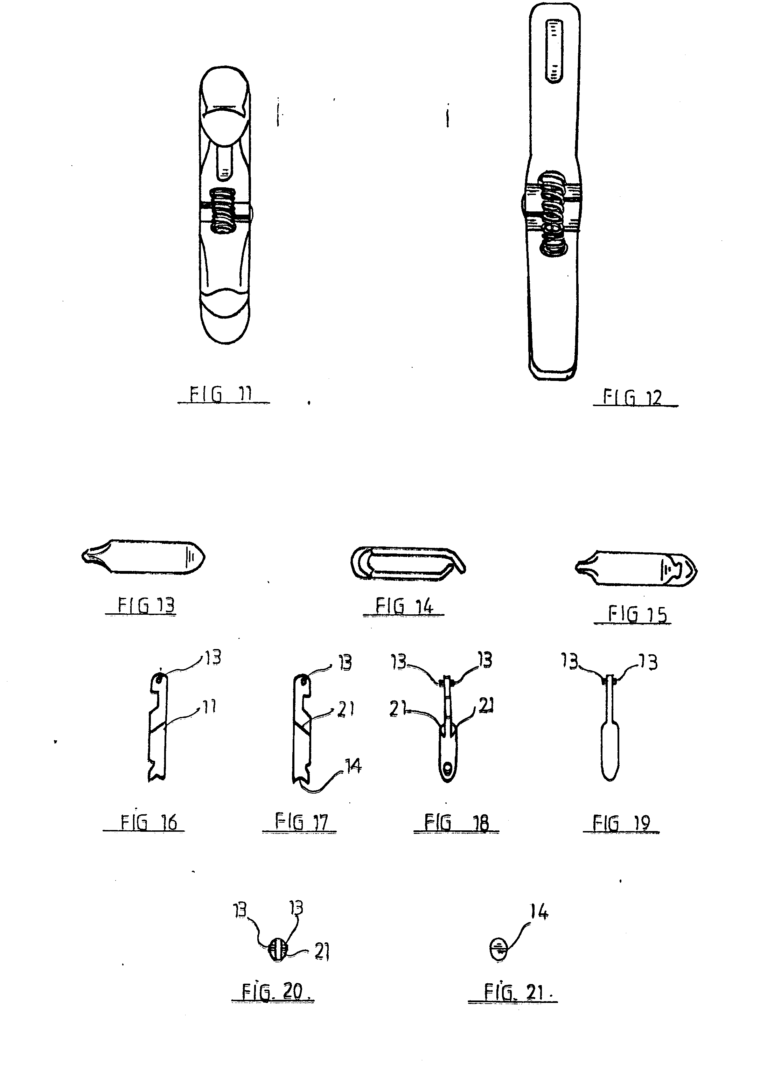

In the preferred form of the present invention the first jaw means 1 includes an ear penetrating member co-acting means 2 and a portion 3 which defines both the ear tag holding means and the anvil region. This can best be seen by reference to figure 1 where the anvil region 4 can be seen. In addition there is the recess region 5 into which the distal end of the first portion of the ear tag is receivable and a groove disposed on either side at 6 into which the second portion of the ear tag can be slid and held against falling out by the distortion needed in order to clear low projection means (e.g. rivets 7) to slide along grooves 6. The preferred tag is as shown in figures 13 to 15 and is preferably held in the manner shown in figures 5a, 6 and 10. The ear tag 8 is preferably of a flexible plastics material and it is ideally one marked by Leader Products Pty. Limited.

The second jaw means 9 preferably includes an opening at 10 through which a portion of the ear penetrating member 11 can project and along which it can be moved within its movement limits. The ear penetrating member 11 is held captive by the second jaw means 9 in the opening 12 by a pin member 13. This pin member can best be seen by reference to figures 16 to 20 inclusive. The pin member end of the member 11 can move around opening 10.

The co-acting means 2 preferably includes an opening through which the ear penetrating member is guided during the actual punching operation (ie, as the end 14 of the ear penetrating member 11 moves towards the anvil region 4). The co-acting means 2 holds the same in a straight punching line. However, once punching has been achieved the ear penetrating member 11 can pivot to the position shown in figure 2. Preferably the interaction between the lower portion of the cooperating means 2 and portions of the ear penetrating member 11 is such that that pivoting can only occur when the jaws are held in a condition as shown in figures 2, 4d, 5b and 5c.

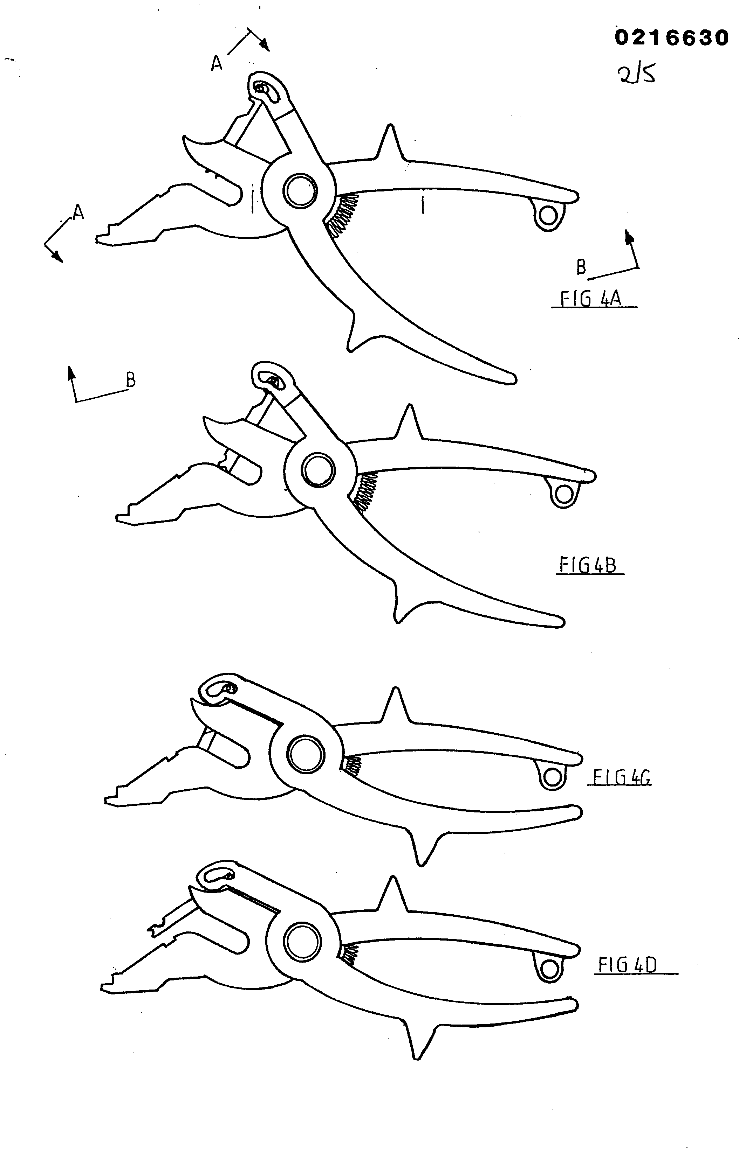

In use therefore, the tool in a condition as shown in figures 1 and 4a would have an ear tag as in figures 13 to 15 engaged with the holding means in a manner as shown in figure 5a. The animals ear 15 would then be interposed between the anvil region 4 and the co-acting means 2 and the handles 15 and 16 squeezed together so that the jaws move to a condition as shown in figure 5a (ie, with the ear penetrating member having punched an opening through the ear 15). In that condition the ear penetrating member 11 is free to move as in figure 5b and this occurs as a result of the tendency of the animal to pull away. In pulling away, the movement of the ear penetrating member causes the distal and region 16 of the ear tag to engage in the engagement means 17 of the ear penetrating member 11. Thereafter, further movement in the arrowed direction by the animal causes the ear tag to move through the opening that has been punched. This is best seen by reference to figures 5b and 5c. Therefore it may not be strictly correct to speak of the ear penetrating member 11 pulling the ear tag through. It may be more correct to say that the animals pulls its own ear from the ear penetrating member 11 which itself is holding the distal end of the ear tag in a condition so that in continuing its movement the animals ear will slide down onto the ear tag to its spanning portion 18 prior to pulling the ear tag from the holding means. This further movement can best be seen by reference to figures 5d and 5e.

In the preferred form of the present invention jaw means 9 is integral with handle 15 and the first jaw means is integral with handle 16. The two are pivoted together in a scissor manner and can, if desired, be held in that relationship by a circlip. Preferably spring means 19 is provided to bias the handles apart and thus the jaws apart. This bias can be easily overcome. Preferably also one of the handles includes an eyelet 20 to enable the applicator to be hung from a nail or hook.

In the preferred form of the present invention it can be seen that there is no permanently defined pivot axis for the ear penetrating member. The pivot axis, if any, or the locus of pviot axes is defined by means of an abutment (sliding and/or rocking) between the co-acting means 2 and the shoulder region 21 of the ear penetrating member 11 (see figures 16 to 20).

With an applicator in accordance with the present invention, the farmer or other user will find it simple to load the tool. It is then a simple matter of then punching the animal's ear and the tag is
applied with any relative movement being affected by the animal
itself. It is believed therefore, a tool in accordance with the present
invention, should have widespread application.

CLAIMS:

1. An ear tag applicator for tags of a unitary kind having first and second portions held together at or adjacent an extremity of each portion by a spanning region in such a way that a distal extremity of said first portion can be passed through an appropriate hole in an animal's ear and the tag can then be arranged so that the said spanning portion rests positioned through the ear and said first and second portions together sandwich over at least some of their extent the animals ear, said applicator comprising

means providing first and second jaw means (1,9) as hereinbefore defined in a pivoted inter-relationship, said first jaw means (1) having holding means (3) to hold a said tag with its spanning region disposed more remotely than said distal extremity of said first portion from the pivot of said applicator, said first portion being closer to said second jaw means (9) than said first portion, means defining an anvil region (4) against which an ear to be tagged can be positioned and ear penetrating member co-acting means (2) spaced from said anvil region (4) but interposed between said anvil region (4) and said second jaw means (9),

an ear penetrating member (11) held captive by said second jaw means (9) and passing through said co-acting means (2), and means (15,16) whereby said jaw means can be caused to move towards each other, the construction and arrangement being such that upon movement of said first and second jaw means towards each other about the pivot thereof said ear penetrating member will be guidably urged by said second jaw means towards and preferably through said anvil region of said first jaw means, said ear penetrating member being movable in the opposite direction upon the moving apart of said first and second jaw means about the pivot thereof, said ear penetrating member having engagement means (17) at or towards its ear penetrating end (14) to engage the distal extremity of said first portion of a tag held on said holding means, the penetrating member having the degree of freedom relative to said first jaw means and said second jaw means whereby the penetrating member in use after passing through an animals ear interposed between the anvil region and the co-acting means of said first jaw can move to first engage said distal extremity of said first portion and thereafter pull said first portion to allow the first portion to pass through the hole that has been punched in the animals ear as said applicator and animal's ear more relatively apart and upon more relative movement leave the tag on the ear clear of said holding means and said engagement means of said ear penetrating member, the ear penetrating member (thus clear of the ear and the ear tag that has been applied to the animals ear) being able to return to a condition for a fresh punching and ear tagging cycle.

2. An ear tag applicator as claimed in claim 1 wherein the ear penetrating member (11) is arranged relative to said second jaw means (9) and said co-acting means (2) such that the same can pivot about a floating pivot (arising from an abutment therebetween whether sliding or stationary) from its disposition when disposed for punching through an animals ear (or being retracted for subsequent use) to its condition which allows the clearing of the ear from the ear penetrating member after punching and pulling of the ear tag therethrough without the need to retract the ear penetrating member.

3. An ear tag applicator as claimed in claim 1 or claim 2 wherein said means whereby said jaw means can be caused to move towards each other comprises handles (15,16) extending from each jaw means so that each jaw means and its handle is part of scissor action.

4. An ear tag applicator as claimed in any one of the preceding claims wherein means (19) is provided to bias the handles and thus the jaw means apart.

5. An ear tag applicator as claimed in any one of the preceding claims wherein said holding means (3) is arranged to receive an ear tag with its first and second portions splayed to some extent from their natural position relation to each other.

6. An ear tag applicator as claimed in any one of the preceding claims wherein the distal end of said first portion when held by said holding means (3) is engaged in a recess to which said penetrating member can move for the purpose of engaging said distal end with its engagement means.

7. An ear tag applicator as claimed in any one of the preceding claims wherein said ear penetrating member is held captive by said second jaw means in a manner substantially as hereinbefore described with reference to any of the accompanying drawings.

8. An ear tag applicator as claimed in any one of the preceding claims wherein the holding means (3) engages said second portion in such a way that when said ear penetrating member (11) engages the distal end of said first portion and upon movement of an animal whose ear is being tagged relative to the applicator the animal tends (with the guidance of the ear penetrating member as it moves back through the hole it has punched) to pull is own ear onto the first portion to or substantially to the spanning region thereof just before and/or as it pulls said second portion from said holding means.

9. An ear tag applicator as claimed in any one of the preceding claims wherein said anvil region (4) does not surround that side of the ear penetrating member (11) having said engagement means (17).

10. In combination an ear tag applicator as claimed in any one of the preceding claims and an ear tag of the kind capable of being applied by said ear tag applicator.

11. A combination as claimed in claim 10 wherein said ear tag is held by said holding means in a manner ready for ear tagging by a method substantially as hereinbefore described with or without reference to any of the accompanying drawings.

12. A marketable commodity comprising ear tagging apparatus as claimed in any one of claims 1 to 9 and plurality of ear tags each of which is capable of being applied by the ear tag applicator.

**0216630**

FIG 1

FIG 2

FIG 3

0216630

2/5

A

A

B

FIG 4A

B

FIG 4B

FIG 4C

FIG 4D

0216530

15

8

C

C

FIG 5A

15  11

16

FIG 5B

16  17

FIG 5G

FIG 5D

FIG 5E

0216630

4/5

FIG 6

FIG 7

FIG 8

FIG 22

FIG 9

FIG 10

ememeeremal- eeperperетеeетеmeefoffeff

FIG 11   FIG 12   FIG 13   FIG 14   FIG 15   FIG 16   FIG 17   FIG 18   FIG 19   FIG 20   FIG 21

0216630

5/5